(19)

Europäisches
Patentamt
European
Patent Office
Office européen
des brevets

(11) **EP 3 280 168 A1**

(12) **EUROPEAN PATENT APPLICATION**
published in accordance with Art. 153(4) EPC

(43) Date of publication:
**07.02.2018 Bulletin 2018/06**

(21) Application number: **15886909.9**

(22) Date of filing: **31.03.2015**

(51) Int Cl.:
**H04W 24/08** (2009.01)

(86) International application number:
**PCT/CN2015/075590**

(87) International publication number:
**WO 2016/154923 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Fujitsu Limited**
**Kawasaki-shi, Kanagawa 211-8588 (JP)**

(72) Inventors:
- **SONG, Lei**
  **Beijing 100025 (CN)**
- **WANG, Xin**
  **Beijing 100025 (CN)**

(74) Representative: **Haseltine Lake LLP**
**Lincoln House, 5th Floor**
**300 High Holborn**
**London WC1V 7JH (GB)**

(54) **METHOD, DEVICE AND COMMUNICATION SYSTEM FOR OBTAINING BEAM INFORMATION**

(57)     A beam information acquisition method and apparatus and a communications system. The method includes: transmitting a first reference signal to a user equipment by using K antenna elements; receiving a beam index fed back by the user equipment; determining a vector having a length K according to the beam index; estimating a vector having a length L according to the vector having a length K; determining multiple weighting vectors based on the vector having a length L; transmitting the weighted second reference signal to the user equipment; and receiving feedback information on multiple transmission antenna ports fed back by the user equipment, and obtaining beam weighting information according to the feedback information. Hence, the base station may relatively accurately obtain the beam weighting information, and the beam weighting information may be better applied to a massive MIMO system.

**Fig. 5**

**EP 3 280 168 A1**

**Description**

Technical Field

This disclosure relates to the field of communications technologies, and in particular to a beam information acquisition method and apparatus and a communications system in a massive multiple input multiple output (MIMO) system.

Background

A millimeter wave technology (mmWave) and a massive MIMO technology are candidate technologies of the fifth generation (5G) mobile communication technology study. The combination of massive MIMO and mmWave can provide wider transmission bandwidth and a larger number of antennas for a system, thereby improving performance of the system.

However, increase of the numbers of antennas and subcarriers will result in hard achievement of a baseband precoding technology. On the one hand, the complexity of processing is relatively high, large-dimension matrix multiplication calculation needs to be performed on each subcarrier, and the complexity of the system may significantly be increased along with the increase of the number of antennas and the increase of the bandwidth. And on the other hand, if flexible baseband precoding technology is to be achieved, each physical antenna needs to be configured with a set of radio frequency (RF) chains, including an amplifier, a mixer, a digital-to-analog converter and an analog-to-digital converter, etc., and the cost of the system is relatively high.

If the baseband precoding technology is carried out in an RF unit, large-dimension matrix multiplication calculation is performed on each symbol once, which will greatly lower the complexity of the system, but the performance of the system will also be correspondingly lowered. Precoding in which a baseband and an RF are mixed (beamforming) may perform precoding operation jointly on the baseband and the RF, as advantages of baseband precoding and RF precoding are integrated therein, which is more suitable for use in a massive MIMO system, and an effective tradeoff between system performance (flexibility) and complexity may be achieved.

In the current study of an adaptive antenna system (AAS) in 3GPP RAN4, it is defined that transceiver units (TXRUs) include multiple transmission units (TXUs) and reception units (RXUs). The TXUs take baseband signals of the AAS of a base station as input, and provide output of RF transmission signals. The output of the RF transmission is distributed to an antenna array via a radio distribution network (RDN).

It should be appreciated that the above description of the background is merely provided for clear and complete explanation of this disclosure and for easy understanding by those skilled in the art. And it should not be understood that the above technical solution is known to those skilled in the art as it is described in the background of this disclosure.

Summary

However, it was found by the inventors that only a virtualization model is defined currently, and there exists no solution for how to obtain beam weighting information (for example, a TXRU virtualization weighting matrix), which is unable to be better applied to a massive MIMO system.

Embodiments of this disclosure provide a beam information acquisition method and apparatus and a communications system. It is expected that a user equipment (UE) feeds back power information on multiple ports, and beam weighting information may be obtained according to the power information on multiple ports.

According to a first aspect of the embodiments of this disclosure, there is provided a beam information acquisition method, applicable to a base station having a planar antenna array, the planar antenna array including multiple antenna elements, the multiple antenna elements forming multiple columns in a vertical direction and multiple rows in a horizontal direction, the beam information acquisition method including:

transmitting a first reference signal to a user equipment by using K antenna elements; where, K is less than M, M being the number of antennas in the same polarization direction in each column in the vertical direction;
receiving a beam index fed back by the user equipment;
determining a vector having a length K according to the beam index;
estimating a vector having a length L according to the vector having a length K; where, $K \leq L \leq M$;
determining multiple weighting vectors based on the vector having a length L;
performing weighting on a second reference signal by using the multiple weighting vectors, and transmitting the weighted second reference signal to the user equipment; and
receiving feedback information on multiple transmission antenna ports fed back by the user equipment, and acquiring beam weighting information according to the feedback information.

According to a second aspect of the embodiments of this disclosure, there is provided a beam information acquisition apparatus, configured in a base station having a planar antenna array, the planar antenna array including multiple antenna elements, the multiple antenna elements forming multiple columns in a vertical direction and multiple rows in a horizontal direction, the beam information acquisition apparatus including:

a first signal transmitting unit configured to transmit a first reference signal to a user equipment by using K antenna elements; where, K is less than M, M being the number of antennas in the same polarization direction in each column in the vertical direction;
a first information receiving unit configured to receive a beam index fed back by the user equipment;
a first vector determining unit configured to determine a vector having a length K according to the beam index;
a vector estimating unit configured to estimate a vector having a length L according to the vector having a length K; where, $K \leq L \leq M$;
a second vector determining unit configured to determine multiple weighting vectors based on the vector having a length L;
a second signal transmitting unit configured to perform weighting on a second reference signal by using the multiple weighting vectors, and transmit the weighted second reference signal to the user equipment; and
a second information receiving unit configured to receive feedback information on multiple transmission antenna ports fed back by the user equipment, and to acquire beam weighting information according to the feedback information.

According to a third aspect of the embodiments of this disclosure, there is provided a beam information acquisition method, applicable to a user equipment, the beam information acquisition method including:

receiving a first reference signal transmitted by a base station at K antenna elements; where, K is less than M, M being the number of antennas in the same polarization direction in each column in a vertical direction in the base station;
performing channel estimation according to the first reference signal;
calculating a beam index according to a result of the channel estimation;
feeding the beam index back to the base station;
receiving a second reference signal weighted by using weighting vectors and transmitted by the base station;
calculating receiving power of multiple transmission antenna ports according to the second reference signal;
obtaining feedback information on the multiple transmission antenna ports by comparing the receiving power with a predefined threshold value; and
transmitting the feedback information to the base station.

According to a fourth aspect of the embodiments of this disclosure, there is provided a beam information acquisition apparatus, configured in a user equipment, the beam information acquisition apparatus including:

a first signal receiving unit configured to receive a first reference signal transmitted by a base station at K antenna elements; where, K is less than M, M being the number of antennas in the same polarization direction in each column in a vertical direction in the base station;
a channel estimating unit configured to perform channel estimation according to the first reference signal;
an index calculating unit configured to calculate a beam index according to a result of the channel estimation;
a first information transmitting unit configured to feed the beam index back to the base station;
a second signal receiving unit configured to receive a second reference signal weighted by using weighting vectors and transmitted by the base station;
a power calculating unit configured to calculate receiving power of multiple transmission antenna ports according to the second reference signal;
a power comparing unit configured to obtain feedback information on the multiple transmission antenna ports by comparing the receiving power with a predefined threshold value; and
a second information transmitting unit configured to transmit the feedback information to the base station.

According to a fifth aspect of the embodiments of this disclosure, there is provided a communications system, including:

a base station having a planar antenna array including multiple antenna elements, the multiple antenna elements forming multiple columns in a vertical direction and multiple rows in a horizontal direction; the base station is configured to transmit a first reference signal to a user equipment by using K antenna elements, receive a beam index fed back

EP 3 280 168 A1

by the user equipment, determine a vector having a length K according to the beam index, estimate a vector having a length L according to the vector having a length K, determine multiple weighting vectors based on the vector having a length L, perform weighting on a second reference signal by using the multiple weighting vectors, transmit the weighted second reference signal to the user equipment, receive feedback information on multiple transmission antenna ports fed back by the user equipment, and acquire beam weighting information according to the feedback information; where, M is the number of antennas in the same polarization direction in each column in the vertical direction in the base station, K is less than M, and K$\leq$L$\leq$ M; and

a user equipment configured to receive a first reference signal transmitted by the base station at K antenna elements, perform channel estimation according to the first reference signal, calculate a beam index according to a result of the channel estimation, feed the beam index back to the base station, receive a second reference signal weighted by using weighting vectors and transmitted by the base station, calculate receiving power of multiple transmission antenna ports according to the second reference signal, obtain feedback information on the multiple transmission antenna ports by comparing the receiving power with a predefined threshold value, and transmit the feedback information to the base station.

According to another aspect of the embodiments of this disclosure, there is provided a computer readable program code, which, when executed in a base station, will cause a computer unit to carry out the beam information acquisition method as described above in the base station.

According to a further aspect of the embodiments of this disclosure, there is provided a computer readable medium, including a computer readable program code, which will cause a computer unit to carry out the beam information acquisition method as described above in a base station.

According to another aspect of the embodiments of this disclosure, there is provided a computer readable program code, which, when executed in a UE, will cause a computer unit to carry out the beam information acquisition method as described above in the UE.

According to a further aspect of the embodiments of this disclosure, there is provided a computer readable medium, including a computer readable program code, which will cause a computer unit to carry out the beam information acquisition method as described above in a UE.

An advantage of the embodiments of this disclosure exists in that the base station first transmits a reference signal at relative few ports, and calculates a vector of a relatively small length according to one or more beam indices that are fed back and estimates a vector of a relatively large length, then transmits a reference signal again according to vectors of relatively large lengths, so as to obtain power information on multiple transmission antenna ports fed back by the user equipment. Hence, the base station may relatively accurately obtain the beam weighting information, and the beam weighting information may be better applied to a massive MIMO system.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

Brief Description of the Drawings

Many aspects of the disclosure can be better understood with reference to the following drawings. The components in the drawings are not necessarily to scale, emphasis instead being placed upon clearly illustrating the principles of this disclosure. To facilitate illustrating and describing some parts of the disclosure, corresponding portions of the drawings may be exaggerated or reduced.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

FIG. 1 is a schematic diagram of a structure of a planar antenna array of the same polarization antenna configuration;
FIG. 2 is a schematic diagram of a structure of a planar antenna array of cross polarization antenna configuration;
FIG. 3 is a schematic diagram of a connection relationship between each column of M antenna elements in the same polarization direction and $M_{TXRU}$ TXRUs in a TXRU virtualization model 1;

FIG. 4 is a schematic diagram of a connection relationship between each column of M antenna elements in the same polarization direction and $M_{TXRU}$ TXRUs in a TXRU virtualization model 2;

FIG. 5 is a flowchart of the beam information acquisition method of Embodiment 1 of this disclosure;

FIG. 6 is a flowchart of the beam information acquisition method of Embodiment 2 of this disclosure;

FIG. 7 is a flowchart of the beam information acquisition method of Embodiment 3 of this disclosure;

FIG. 8 is a schematic diagram of the beam information acquisition apparatus of Embodiment 4 of this disclosure;

FIG. 9 is a schematic diagram of a structure of the base station of Embodiment 4 of this disclosure;

FIG. 10 is a schematic diagram of the beam information acquisition apparatus of Embodiment 5 of this disclosure;

FIG. 11 is a schematic diagram of a structure of the user equipment of Embodiment 5 of this disclosure; and

FIG. 12 is a schematic diagram of the communications system of Embodiment 6 of this disclosure.

Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

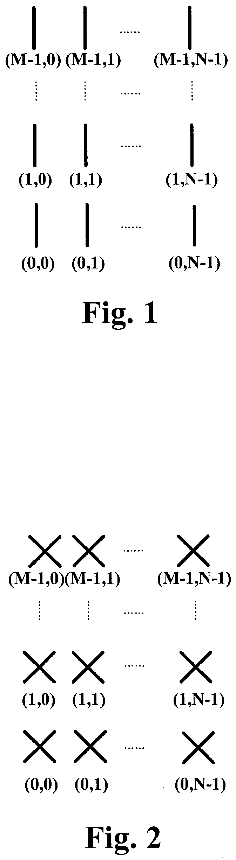

FIGs. 1 and 2 give schematic diagrams of structures of two planar antenna arrays related to the embodiments of this disclosure, in which FIG. 1 is a schematic diagram of a structure of a planar antenna array of the same polarization antenna configuration, and FIG. 2 is a schematic diagram of a structure of a planar antenna array of cross polarization antenna configuration.

As shown in FIG. 1, M antenna elements (which may also be referred to as physical antenna elements) in the same polarization direction are placed in each column in a vertical direction, and N columns are placed in a horizontal direction. As shown in FIG. 2, M cross polarization antenna pairs are placed in each column in the vertical direction, and N columns of cross polarization antenna pairs are placed in the horizontal direction. That is, there exist M physical antenna elements in each polarization direction in a vertical column, and there exist N physical antenna elements in each polarization direction in a horizontal row.

The two types of antenna configuration may be expressed as (M, N, P); where, P denotes the number of polarization dimensions, it being the same polarization configuration when P = 1, as shown in FIG. 1, and it being cross polarization configuration when P = 2, as shown in FIG. 2. Each column of M antenna elements in the same polarization direction are connected to $M_{TXRU}$ TXRUs, and the total number of TXRUs is $M_{TXRU} \times N \times P$.

In the above planar antenna array system, as increase of the number of antennas, overhead of the reference signals increases. In order to bring a function of adjusting beams in the vertical direction into play while control the number of antenna ports, multiple antennal elements in the vertical direction may be virtualized into one or more antenna ports. Within a virtualized antenna port, beam directions in the vertical direction may be adjusted by weighting multiple physical antenna elements. Corresponding to the weighting of the physical antenna elements, weighting of the virtualized antenna port is the precoding operation in a conventional sense.

In the current study of full dimension MIMO in 3GPP RANI, connection relationships between transceiver units (TXRUs) and physical antenna elements are discussed. Each column of M antenna elements in the same polarization direction are connected to $M_{TXRU}$ TXRUs in FIGs. 1 and 2, and the total number of TXRUs is $M_{TXRU} \times N \times P$.

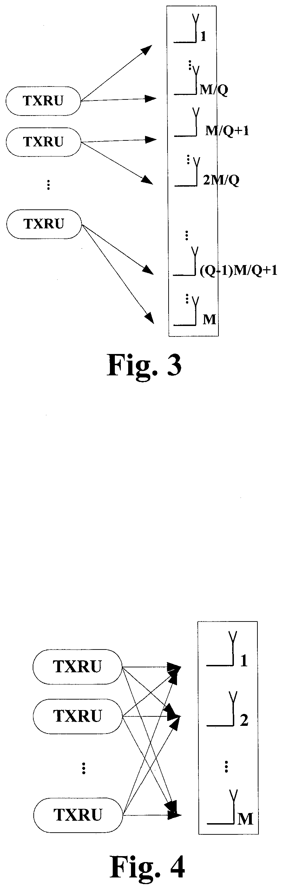

Furthermore, two virtualization models of TXRUs are discussed in RANI, one is a sub-array segmentation model, and the other is a full connection model. FIGs. 3 and 4 respectively give connection relationships between each column of M antenna elements in the same polarization direction and $M_{TXRU}$ TXRUs in the two models.

In the two virtualization models of TXRUs, $q$ is signal vectors at the antenna elements, i.e., transmission signal vectors of the antennas, and $x$ is signal vectors at the TXRUs.

For the virtualization model 1 of TXRUs, each TXRU is connected to K antenna elements, K = $M/M_{TXRU}$, $w$ is weighting performed on data streams by each TXRU, and all the $M_{TXRU}$ TXRUs use the same weighting, that is, the virtualization model may be expressed as $q = x \otimes w$; where, $\otimes$ is a Kronecker product operation, and w may be a discrete Fourier transform (DFT) vector, for example:

$$w_k = \frac{1}{\sqrt{K}} exp\left(-j\frac{2\pi}{\lambda}(k-1)d_V cos\,\theta_{etilt}\right) for\ k = 1,...,K \qquad (1);$$

where, $\theta_{etilt}$ is an electronic downtilt angle in the vertical direction.

For the virtualization model 2 of TXRUs, each TXRU is connected to M antenna elements, $W$ is weighting performed on signals $x$ by the $M_{TXRU}$ TXRUs, that is, the virtualization model may be expressed as $q = Wx$. Each column of $W$ may be a DFT vector, for example:

$$\mathbf{W}_{m,m'} = \frac{1}{\sqrt{M}} exp\left( -j\frac{2\pi}{\lambda}(m-1)d_V cos\, \theta_{etilt,m'} \right);$$

$$m = 1, \cdots, M; m' = 1, \cdots, M_{TXRU}$$

where, $\theta_{etilt}$ is an electronic downtilt angle in the vertical direction. Or,

$$\mathbf{W}_{m,m'} = \frac{1}{\sqrt{M}} exp\left( -j\frac{2\pi(m-1)d_V n_{m'}}{\lambda N_M} \right);$$

$$m = 1, \cdots, M; m' = 1, \cdots, M_{TXRU}$$

where, $N_M$ denotes a size of a DFT vector of a length M, and $n_{m'}$ denotes an index of a DFT vector selected by an $m'$-*th* TXRU in the codebook.

It should be appreciated that in the two types of antenna configuration shown in FIGs. 1 and 2, the columns of antenna elements use the same virtualization model of TXRUs, and weighting values of the columns are identical. And the weighting values are applicable to all bands in the same time symbol. This shows that if the virtualization model 1 of TXRUs is used, transmission of one beam is only supported at the same moment; and if the virtualization model 2 of TXRUs is used, transmission of $M_{TXRU}$ beams is supported at the same moment.

The planar antenna arrays and virtualization models of TXRUs related to the embodiments of this disclosure are described above; however, this disclosure is not limited thereto. The embodiments of this disclosure shall be described below in detail. Following discussion is directed to the case of P = 1, i.e., the same polarization configuration, hence, P is omitted. For the cross polarization configuration, it is only needed to adjust the numbers of corresponding ports, which shall not be described herein any further.

Embodiment 1

The embodiment of this disclosure provides a beam information acquisition method, applicable to a base station having a planar antenna array, the planar antenna array including multiple antenna elements, the multiple antenna elements forming multiple columns in a vertical direction and multiple rows in a horizontal direction. The embodiment of this disclosure shall be described from a base station side.

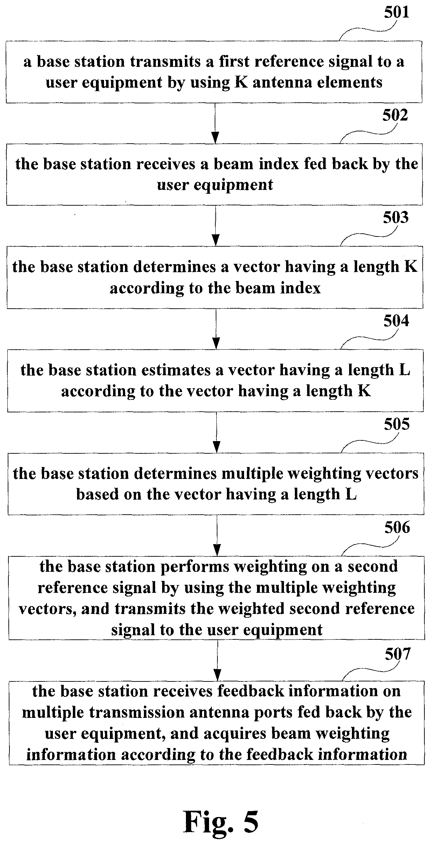

FIG. 5 is a flowchart of the beam information acquisition method of the embodiment of this disclosure. As shown in FIG. 5, the method includes:

Block 501: a base station transmits a first reference signal to a user equipment by using K antenna elements; where, K is less than M, M being the number of antennas in the same polarization direction in each column in the vertical direction;

Block 502: the base station receives a beam index fed back by the user equipment;

Block 503: the base station determines a vector having a length K according to the beam index;

Block 504: the base station estimates a vector having a length L according to the vector having a length K; where, $K \leq L \leq M$;

Block 505: the base station determines multiple weighting vectors based on the vector having a length L;

Block 506: the base station performs weighting on a second reference signal by using the multiple weighting vectors, and transmits the weighted second reference signal to the user equipment; and

Block 507: the base station receives feedback information on multiple transmission antenna ports fed back by the user equipment, and acquires beam weighting information according to the feedback information.

In this embodiment, the M may be divisible by the K. The base station may use orthogonal resources to transmit one or more first reference signals (RSs) in the K antenna elements, and the K antenna elements may be K antenna elements continuously placed in the vertical direction, or may be K antenna elements in the vertical direction having fixed intervals. And the base station may receive one or more beam indices (which may also be referred to as beam numbers, etc.) fed back by the user equipment based on the first reference signals.

In this embodiment, the transmission antenna port refers to a virtualization port formed by the planar antenna array at the base station side, and the base station may decide on its own the number of antenna ports to be used. The maximum number of antenna ports is the total number of TXRUs, that is, $M_{TXRU} \times N \times P$; for example, the base station may use M ports, and may also use ports of another number; however, this disclosure is not limited thereto.

Furthermore, each transmission antenna port may use one or more time-frequency resources to transmit the reference signals. The number of the ports and the number of the time-frequency resources are not limited in this disclosure, which may be any number of ports and any number of time-frequency resources.

In this embodiment, identical first codebooks consisting of beamforming weighting values of antennal elements of a length K are stored at both the base station side and the user equipment side. And in block 503, the base station may determine the vector having a length K according to the received beam index n and the first codebooks.

In this embodiment, the base station side may further store multiple second codebooks. In the multiple second codebooks, the lengths and/or numbers of the DFT vectors may be partially or completely different. The base station may estimate a vector $b_L$ having a length L according to the vector $b_K$ having a length K; where, $K \leq L \leq M$.

For example, for DFT codebooks of a length K and the number of $N_1$ (the first codebooks), an $n_1$-th codeword (i.e., a vector) is:

$$\left[1 \quad e^{j\frac{2\pi\lambda n_1}{dN_1}} \quad \cdots \quad e^{j\frac{2\pi\lambda(K-1)n_1}{dN_1}}\right]^T ;$$

and for DFT codebooks of a length M and the number of $N_1$ (the second codebooks), an $n_1$-th codeword is:

$$\left[1 \quad e^{j\frac{2\pi\lambda n_1}{dN_1}} \quad \cdots \quad e^{j\frac{2\pi\lambda(M-1)n_1}{dN_1}}\right]^T .$$

It can be seen that former K elements of the two codewords are identical, with an exception that beam widths formed by them are different, and a main lobe of a beam formed by the DFT vector of the length K is wider than that of a beam formed by the DFT vector of the length M. hence, in block 504, the vector $b_L$ of the length L may be estimated according to the vector $b_K$ of the length K.

In block 505, the base station may select multiple weighting vectors for each second codebook according to $b_L$ and the multiple second codebooks.

For example, for each second codebook, $M_{TXRU}$ vectors containing $b_L$ and/or neighboring $b_L$ may be selected and taken as the weighting vectors; $M_{TXRU}$ is the number of transceiver units to which each column of the M antenna elements in the same polarization direction in the vertical direction are connected. Alternatively, $N*M_{TXRU}$ vectors containing $b_L$ and/or neighboring $b_L$ may be selected and taken as the weighting vectors; N is the number of columns of antenna elements in a two-dimensional planar array.

The vectors neighboring $b_L$ refer to DFT vectors of indices neighboring $b_L$ in the same codebook (such as $C_L$). for example, if an index of $b_L$ is 7, when $M_{TXRU}$ is 4, $M_{TXRU}$ weighting vectors neighboring $b_L$ may be DFT vectors of indices 5, 6, 8, 9, in the codebook $C_L$.

In this embodiment, the lengths of the selected weighting vectors may be M, and may also be less than M.

In block 506, the base station may use the multiple weighting vectors to perform weighting on the second reference signal based on the virtualization model 2 of TXRUs; in the virtualization model 2 of TXRUs, each transceiver unit is connected to a column of M antenna elements in the vertical direction.

That is, the base station may use the following model of TXRUs for weighting:

$$\mathbf{W}_{TXRU} = \begin{pmatrix} \mathbf{W} & \cdots & \mathbf{0} \\ \vdots & \ddots & \vdots \\ \mathbf{0} & \cdots & \mathbf{W} \end{pmatrix} \in C^{MN \times NQ} ;$$

$$\mathbf{W} = \begin{bmatrix} \mathbf{b}_1 & \cdots & \mathbf{b}_Q \end{bmatrix} \in C^{M \times Q}$$

where, N is the number of columns of antennas in the horizontal direction, Q is $M_{TXRU}$, and $\mathbf{b}_q(q = 1,\cdots,Q)$ is the weighting vectors determined in block 505, which may be the $M_{TXRU}$ vectors containing $b_L$ and/or neighboring $b_L$ in the codebook $C_L$ when L is fixed, or may be the vectors $b_L$ in the codebook $C_L$ when different values are taken for L, or may be any $M_{TXRU}$ weighting vectors determined in block 505. As to the lengths of the weighting vectors, they may be the DFT vectors of a length M, and when the lengths are less than M (such as a length $L_1$), the weighting may be achieved by setting $M-L_1$ weighting values to be zero.

The base station may also use the following model of TXRUs for weighting:

$$\mathbf{W}_{TXRU} = \begin{pmatrix} \mathbf{W}_1 & \cdots & \mathbf{0} \\ \vdots & \ddots & \vdots \\ \mathbf{0} & \cdots & \mathbf{W}_N \end{pmatrix} \in C^{MN \times NQ} \quad ;$$

$$\mathbf{W}_n = \begin{bmatrix} \mathbf{b}_{n1} & \cdots & \mathbf{b}_{nQ} \end{bmatrix} \in C^{M \times Q}$$

where, N is the number of columns of antennas in the horizontal direction, Q is $M_{TXRU}$, and $\mathbf{b}_{nq}$ ($q = 1,\cdots,Q$) is the weighting vectors determined in block 505, which may denote the $N*M_{TXRU}$ vectors containing $b_L$ and/or neighboring $b_L$ in the codebook $C_L$ when L is fixed, or may be the $N*M_{TXRU}$ vectors $b_L$ in the codebook $C_L$ when different values are taken for L, or may be any $N*M_{TXRU}$ weighting vectors determined in block 505.

In block 506, the base station may also use S time-frequency resource (where, $1 \leq S \leq N*M_{TXRU}$) to transmit the second reference signal; the $M_{TXRU}$ is the number of transceiver units to which M antenna elements in the same polarization direction in each column in the vertical direction are connected.

In this embodiment, the feedback information may be denoted by a bitmap. For example, the bitmap may include S bits (where, $1 \leq S \leq N*M_{TXRU}$) corresponding respectively to S time-frequency resources; for values of the bits, 1 denotes that power of a signal transmitted by the base station and received by the user equipment at a corresponding port is greater than or equal to a predefined threshold value, and 0 denotes that power of a signal transmitted by the base station and received by the user equipment at a corresponding port is less than the predefined threshold value.

In this embodiment, after obtaining the feedback information, the base station may determine a direction of signal transmission according to the feedback information. For example, if signals received by a certain user equipment at some ports are relatively intensive, beam weighting matrices may be appropriately adjusted, i.e., determining beam weighting information.

It can be seen from the above embodiment that the base station first transmits a reference signal at relative few ports, and calculates a vector of a relatively small length according to one or more beam indices that are fed back and estimates a vector of a relatively large length, then transmits a reference signal again according to vectors of relatively large lengths, so as to obtain power information on multiple transmission antenna ports fed back by the user equipment. Hence, the base station may relatively accurately obtain the beam weighting information, and the beam weighting information may be better applied to a massive MIMO system.

Embodiment 2

The embodiment of this disclosure provides a beam information acquisition method, applicable to a user equipment. The embodiment of this disclosure shall be described from a user equipment side, with contents identical to those in Embodiment 1 being not going to be described any further.

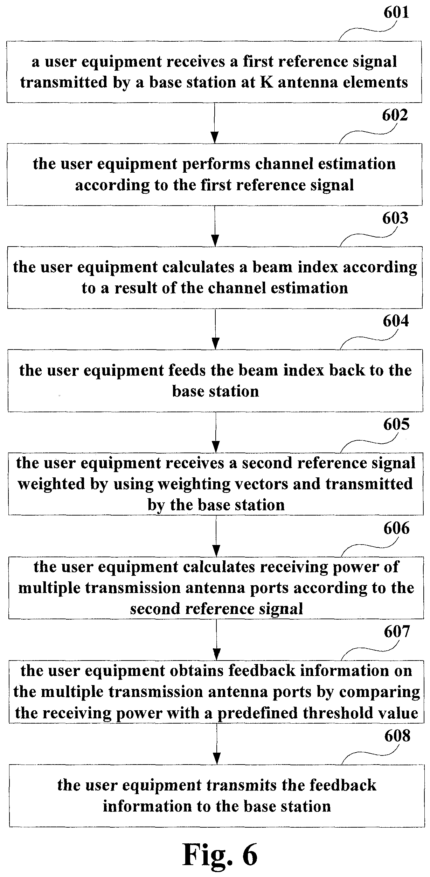

FIG. 6 is a flowchart of the beam information acquisition method of the embodiment of this disclosure. As shown in FIG. 6, the method includes:

Block 601: a user equipment receives a first reference signal transmitted by a base station at K antenna elements; where, K is less than M, M being the number of antennas in the same polarization direction in each column in a vertical direction in the base station;

Block 602: the user equipment performs channel estimation according to the first reference signal;

Block 603: the user equipment calculates a beam index according to a result of the channel estimation;

Block 604: the user equipment feeds the beam index back to the base station;

Block 605: the user equipment receives a second reference signal weighted by using weighting vectors and transmitted by the base station;

Block 606: the user equipment calculates receiving power of multiple transmission antenna ports according to the second reference signal;

Block 607: the user equipment determines feedback information on the multiple transmission antenna ports by comparing the receiving power with a predefined threshold value; and

Block 608: the user equipment transmits the feedback information to the base station.

In this embodiment, the user equipment side may further store a first codebook; and in block 603, the user equipment may calculate the beam index n based on the first codebook according to the result of the channel estimation.

In block 605, the user equipment may further receive the second reference signal in S (where, $1 \leq S \leq N*M_{TXRU}$) time-frequency resources; where, $M_{TXRU}$ is the number of transceiver units to which M antenna elements in the same polarization direction in each column in the vertical direction in the base station are connected. In block 606, for each resource u, the user equipment may calculate receiving power of each port in the multiple transmission antenna ports.

For example, in block 607, for each port in the multiple transmission antenna ports, the user equipment sets corresponding information on the bitmap to be 1 when the receiving power is greater than or equal to the predefined threshold value, and sets corresponding information on the bitmap to be 0 when the receiving power is less than the predefined threshold value.

It can be seen from the above embodiment that the user equipment receives a reference signal transmitted by the base station at relative few ports and feeds back one or more beam indices, then receives a reference signal weighted by using weighting vectors and transmitted by the base station, generates power information on multiple transmission antenna ports according to the reference signal and feeds back the information to the base station. Hence, the base station may relatively accurately obtain the beam weighting information, and the beam weighting information may be better applied to a massive MIMO system.

Embodiment 3

The embodiment of this disclosure provides a beam information acquisition method, which shall be described from a base station side and a user equipment side on a basis of embodiments 1 and 2, with contents identical to those in embodiments 1 and 2 being not going to be described any further.

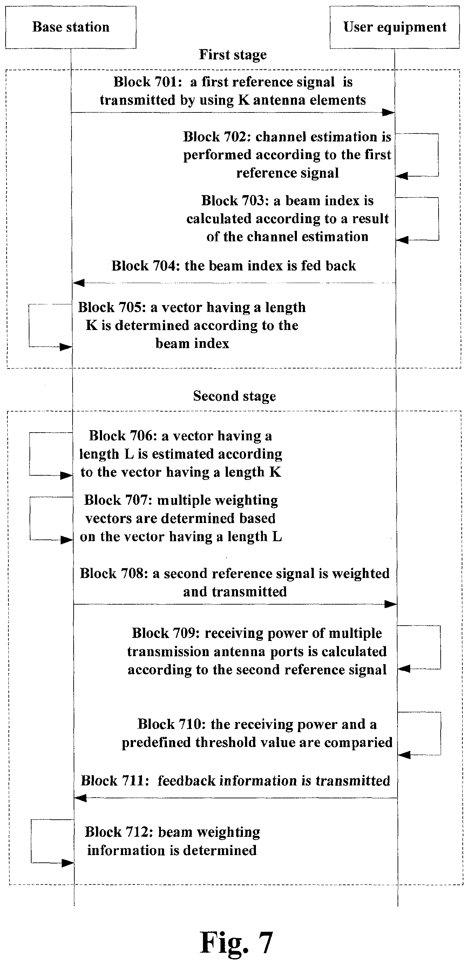

FIG. 7 is a flowchart of the beam information acquisition method of the embodiment of this disclosure. As shown in FIG. 7, the method may include two stages: a first stage is used for selection of initial beam information, and a second stage is used for selection of secondary beam information. As shown in FIG. 7, the method includes:

The first stage:

Block 701: a base station transmits a first reference signal to a user equipment by using K antenna elements; where, K is less than M, M being the number of antennas in the same polarization direction in each column in the vertical direction;

Block 702: the user equipment performs channel estimation according to the first reference signal after receiving the first reference signal;

Block 703: the user equipment calculates a beam index according to a result of the channel estimation;

Block 704: the user equipment feeds the beam index back to the base station; and

Block 705: the base station determines a vector having a length K according to the beam index after receiving the beam index fed back by the user equipment.

In the first stage, by using K ports of lengths less than M by the reference signal, resources occupied in transmitting the reference signal may be reduced, and a precise beam direction may be contained within a coverage range of a fed back DFT vector of a length K.

The second stage:

Block 706: the base station estimates a vector having a length L according to the vector having a length K; where, $K \leq L \leq M$;

Block 707: the base station determines multiple weighting vectors based on the vector having a length L;

Block 708: the base station performs weighting on a second reference signal by using the multiple weighting vectors, and transmits the weighted second reference signal to the user equipment;

Block 709: the user equipment calculates receiving power of multiple transmission antenna ports according to the second reference signal after receiving the second reference signal;

Block 710: the user equipment determines feedback information on the multiple transmission antenna ports by comparing the receiving power with a predefined threshold value;

Block 711: the user equipment transmits the feedback information to the base station; and

Block 712: the base station determines beam weighting information according to the feedback information after receiving the feedback information.

In the second stage, the base station estimates the vector of a relatively large length according to the vector of a relatively small length, and then transmits a reference signal again according to the vector of a relatively large length, so as to obtain the power information on the multiple transmission antenna ports fed back by the user equipment. Hence, the base station may relatively accurately obtain the beam weighting information.

It can be seen from the above embodiment that the base station first transmits a reference signal at relative few ports, and calculates a vector of a relatively small length according to one or more beam indices that are fed back and estimates a vector of a relatively large length, then transmits a reference signal again according to vectors of relatively large lengths, so as to obtain power information on multiple transmission antenna ports fed back by the user equipment. Hence, the base station may relatively accurately obtain the beam weighting information, and the beam weighting information may be better applied to a massive MIMO system.

Embodiment 4

The embodiment of this disclosure provides a beam information acquisition apparatus, configured in a base station having a planar antenna array, the planar antenna array including multiple antenna elements, the multiple antenna elements forming multiple columns in a vertical direction and multiple rows in a horizontal direction.

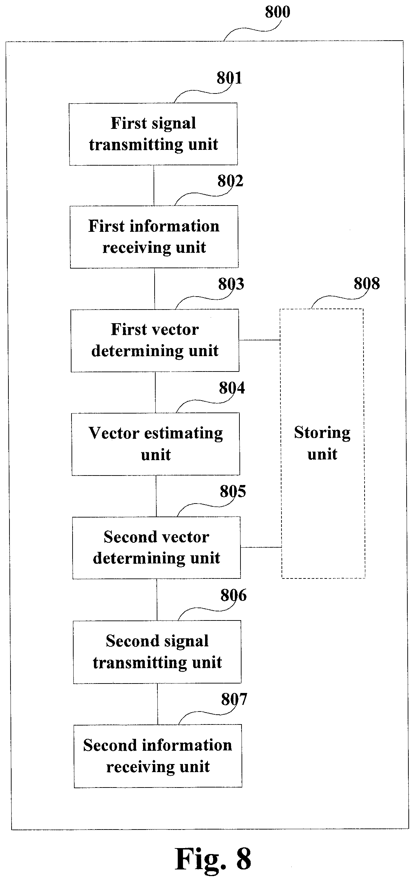

FIG. 8 is a schematic diagram of the beam information acquisition apparatus of the embodiment of this disclosure. As shown in FIG. 8, the beam information acquisition apparatus 800 includes:

a first signal transmitting unit 801 configured to transmit a first reference signal to a user equipment by using K antenna elements; where, K is less than M, M being the number of antennas in the same polarization direction in each column in the vertical direction;

a first information receiving unit 802 configured to receive a beam index fed back by the user equipment;

a first vector determining unit 803 configured to determine a vector having a length K according to the beam index;

a vector estimating unit 804 configured to estimate a vector having a length L according to the vector having a length K; where, $K \leq L \leq M$;

a second vector determining unit 805 configured to determine multiple weighting vectors based on the vector having a length L;

a second signal transmitting unit 806 configured to perform weighting on a second reference signal by using the multiple weighting vectors, and transmit the weighted second reference signal to the user equipment; and

a second information receiving unit 807 configured to receive feedback information on multiple transmission antenna ports fed back by the user equipment, and to determine beam weighting information according to the feedback information.

In this embodiment, the M may be divisible by the K.

As shown in FIG. 8, the beam information acquisition apparatus 800 may further include:

a storing unit 808 configured to store a first codebook and multiple second codebooks; in the multiple second codebooks, the lengths and/or numbers of the DFT vectors may be partially or completely different.

The first vector determining unit 803 is configured to determine the vector having a length K according to the received beam index *n* fed back by the user equipment and the first codebook;

and the second vector determining unit 805 is configured to select multiple weighting vectors respectively for each of the second codebooks according to the vector having a length L and the multiple second codebooks.

In this embodiment, for each of the second codebooks, the second vector determining unit 805 may be configured to select $N*M_{TXRU}$ vectors and takes them as the weighting vectors; the weighting vectors contain the vector having a length L, and/or, the weighting vectors are adjacent to the vector having a length L; where, N is a positive integer, and the $M_{TXRU}$ is the number of transceiver units to which M antenna elements in the same polarization direction in each column in the vertical direction are connected.

In this embodiment, the second signal transmitting unit 806 may be configured to perform weighting on the second reference signal by using the multiple weighting vectors and based on a second TXRU virtualization model; in the second TXRU virtualization model, each of the transceiver units is connected to M antenna elements.

In this embodiment, the second signal transmitting unit 805 may be configured to use S time-frequency resources to transmit the second reference signal (where, $1 \leq S \leq N \cdot M_{TXRU}$); where, N is a positive integer, and the $M_{TXRU}$ is the number of transceiver units to which M antenna elements in the same polarization direction in each column in the vertical direction are connected.

In this embodiment, the feedback information received by the second information receiving unit 807 may be denoted by a bitmap; the bitmap may include S bits corresponding respectively to S time-frequency resources.

For values of the bits, for example, 1 denotes that power of a signal transmitted by the base station and received by the user equipment at a corresponding port is greater than or equal to a predefined threshold value, and 0 denotes that power of a signal transmitted by the base station and received by the user equipment at a corresponding port is less than the predefined threshold value.

The embodiment of this disclosure further provides a base station, configured with the beam information acquisition apparatus 800 described above.

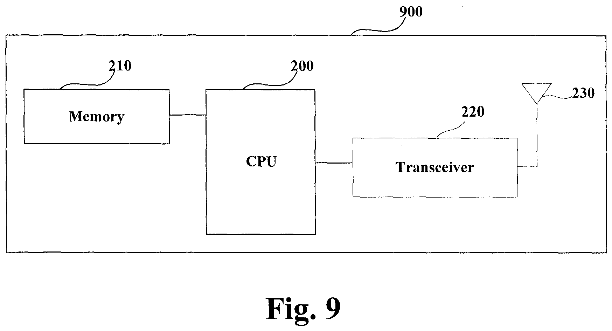

FIG. 9 is a schematic diagram of a structure of the base station of the embodiment of this disclosure. As shown in FIG. 9, the base station 900 may include a central processing unit (CPU) 200 and a memory 210, the memory 210 being coupled to the central processing unit 200. The memory 210 may store various data, and furthermore, it may store a program for information processing, and execute the program under control of the central processing unit 200.

The base station 900 may carry out the beam information acquisition method described in Embodiment 1. The central processing unit 200 may be configured to carry out the functions of the beam information acquisition apparatus 800, that is, the central processing unit 200 may be configured to perform the following control: transmitting a first reference signal to user equipment by using K antenna elements; receiving a beam index fed back by the user equipment; determining a vector having a length K according to the beam index; estimating a vector having a length L according to the vector having a length K; determining multiple weighting vectors based on the vector having a length L; performing weighting on a second reference signal by using the multiple weighting vectors, and transmitting the weighted second reference signal to the user equipment; and receiving feedback information on multiple transmission antenna ports fed back by the user equipment, and acquiring beam weighting information according to the feedback information.

Furthermore, as shown in FIG. 9, the base station 900 may include a transceiver 220, and an antenna 230, etc. Functions of the above components are similar to those in the relevant art, and shall not be described herein any further. It should be appreciated that the base station 900 does not necessarily include all the parts shown in FIG. 9, and furthermore, the base station 900 may include parts not shown in FIG. 9, and the relevant art may be referred to.

It can be seen from the above embodiment that the base station first transmits a reference signal at relative few ports, and calculates a vector of a relatively small length according to one or more beam indices that are fed back and estimates a vector of a relatively large length, then transmits a reference signal again according to vectors of relatively large lengths, so as to obtain power information on multiple transmission antenna ports fed back by the user equipment. Hence, the base station may relatively accurately obtain the beam weighting information, and the beam weighting information may be better applied to a massive MIMO system.

Embodiment 5

The embodiment of this disclosure provides a beam information acquisition apparatus, configured in a user equipment.

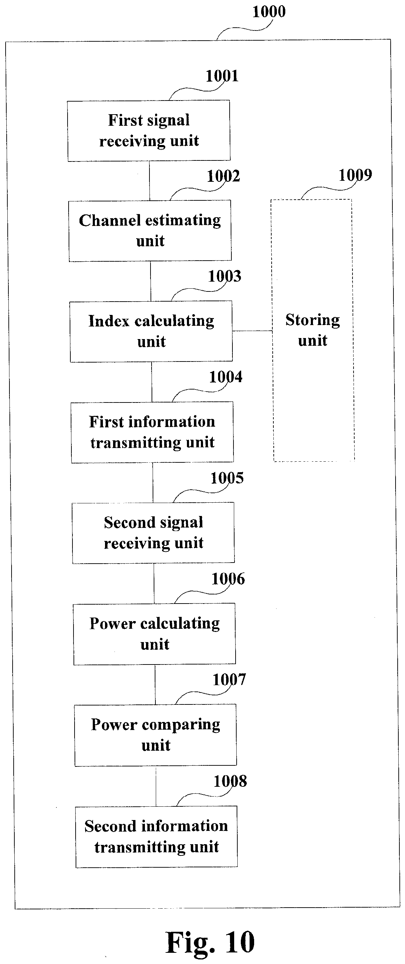

FIG. 10 is a schematic diagram of the beam information acquisition apparatus of the embodiment of this disclosure. As shown in FIG. 10, the beam information acquisition apparatus 1000 includes:

a first signal receiving unit 1001 configured to receive a first reference signal transmitted by a base station at K antenna elements; where, K is less than M, M being the number of antennas in the same polarization direction in each column in a vertical direction in the base station;
a channel estimating unit 1002 configured to perform channel estimation according to the first reference signal;
an index calculating unit 1003 configured to calculate a beam index according to a result of the channel estimation;
a first information transmitting unit 1004 configured to feed the beam index back to the base station;
a second signal receiving unit 1005 configured to receive a second reference signal weighted by using weighting vectors and transmitted by the base station;
a power calculating unit 1006 configured to calculate receiving power of multiple transmission antenna ports according to the second reference signal;
a power comparing unit 1007 configured to obtain feedback information on the multiple transmission antenna ports by comparing the receiving power with a predefined threshold value; and
a second information transmitting unit 1008 configured to transmit the feedback information to the base station.

As shown in FIG. 10, the beam information acquisition apparatus 1000 may further include:

a storing unit 1009 configured to store a first codebook;
and the index calculating unit 1003 is further configured to calculate the beam index n based on the first codebook according to the result of the channel estimation.

In this embodiment, the second signal receiving unit 1005 is further configured to receive the second reference signal in S time-frequency resources; where, $1 \leq S \leq N^* M_{TXRU}$, N being a positive integer, and the $M_{TXRU}$ is the number of transceiver units to which M antenna elements in the same polarization direction in each column in the vertical direction in the base station are connected.

In this embodiment, the power calculating unit 1006 is further configured to, for each resource u, calculate receiving power of each of the multiple transmission antenna ports.

In this embodiment, the feedback information may be denoted by a bitmap, the bitmap including S bits corresponding respectively to S time-frequency resources.

In this embodiment, the power comparing unit 1007 is further configured to, for each of the time-frequency resources, set corresponding information of the bitmap as 1 when the receiving power is greater than or equal to the predefined threshold value, and set corresponding information of the bitmap as 0 when the receiving power is less than the predefined threshold value.

The embodiment of this disclosure further provides a user equipment, configured with the above-described beam information acquisition apparatus 1000.

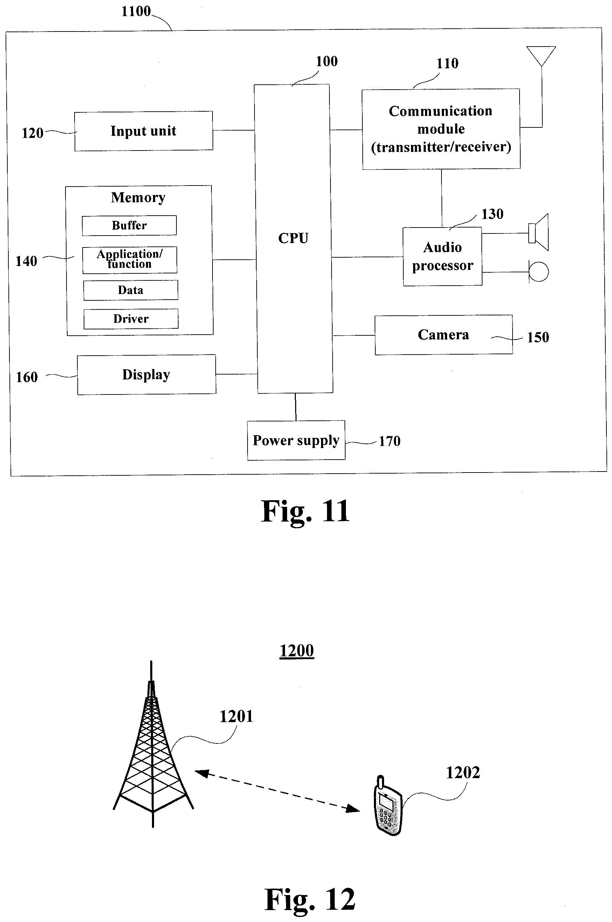

FIG. 11 is a schematic diagram of a systematic structure of the user equipment of the embodiment of this disclosure. As shown in FIG. 11, the user equipment 1100 may include a central processing unit 100 and a memory 140, the memory 140 being coupled to the central processing unit 100. It should be appreciated that this figure is illustrative only, and other types of structures may also be used, so as to supplement or replace this structure and achieve a telecommunications function or other functions.

In an implementation, the functions of the beam information acquisition apparatus 1000 may be integrated into the central processing unit 100. The central processing unit 100 may be configured to perform the following control: receiving a first reference signal transmitted by a base station at K antenna elements; performing channel estimation according to the first reference signal; calculating a beam index according to a result of the channel estimation; feeding the beam index back to the base station; receiving a second reference signal weighted by using a weighting vector and transmitted by the base station; calculating receiving power of multiple transmission antenna ports according to the second reference signal; obtaining feedback information on the multiple transmission antenna ports by comparing the receiving power with a predefined threshold value; and transmitting the feedback information to the base station.

In another implementation, the beam information acquisition apparatus 1000 and the central processing unit 100 may be configured separately. For example, the beam information acquisition apparatus 1000 may be configured as a chip connected to the central processing unit 100, with its functions being realized under control of the central processing unit 100.

As shown in FIG. 11, the user equipment 1100 may further include a communication module 110, an input unit 120, an audio processor 130, a memory 140, a camera 150, a display 160 and a power supply 170. It should be appreciated that the user equipment 1100 does not necessarily include all the parts shown in FIG. 11, and furthermore, the user equipment 1100 may include parts not shown in FIG. 11, and the relevant art may be referred to.

It can be seen from the above embodiment that the user equipment receives a reference signals transmitted by the base station at relative few ports and feeds back one or more beam indices, then receives a reference signal weighted by using weighting vectors and transmitted by the base station, generates power information on multiple transmission antenna ports according to the reference signal and feeds back the information to the base station. Hence, the base station may relatively accurately obtain the beam weighting information, and the beam weighting information may be better applied to a massive MIMO system.

Embodiment 6

The embodiment of this disclosure provides a communications system, with identical to those in embodiments 1-5 being not going to be described any further. FIG. 12 is a schematic diagram of the communications system of the embodiment of this disclosure. As shown in FIG. 12, the communications system 1200 includes a base station 1201 and a user equipment 1202.

The base station 1201 has a planar antenna array, the planar antenna array including multiple antenna elements, the multiple antenna elements forming multiple columns in a vertical direction and multiple rows in a horizontal direction.

The base station 1201 is configured to transmit a first reference signal to user equipment by using K antenna elements, receive a beam index fed back by the user equipment, determine a vector having a length K according to the beam index, estimate a vector having a length L according to the vector having a length K, determine multiple weighting vectors based on the vector having a length L, perform weighting on a second reference signal by using the multiple weighting vectors, transmit the weighted second reference signal to the user equipment, receive feedback information on multiple transmission antenna ports fed back by the user equipment, and acquire beam weighting information according to the feedback information.

The and user equipment 1202 is configured to receive a first reference signal transmitted by the base station at K antenna elements, perform channel estimation according to the first reference signal, calculate a beam index according to a result of the channel estimation, feed the beam index back to the base station, receive a second reference signal weighted by using weighting vectors and transmitted by the base station, calculate receiving power of multiple transmission antenna ports according to the second reference signal, obtain feedback information on the multiple transmission antenna ports by comparing the receiving power with a predefined threshold value, and transmit the feedback information to the base station.

An embodiment of the present disclosure provides a computer readable program code, which, when executed in a base station, will cause a computer unit to carry out the beam information acquisition method described in Embodiment 1 in the base station.

An embodiment of the present disclosure provides a computer readable medium, including a computer readable program code, which will cause a computer unit to carry out the beam information acquisition method described in Embodiment 1 in a base station.

An embodiment of the present disclosure provides a computer readable program code, which, when executed in a user equipment, will cause a computer unit to carry out the beam information acquisition method described in Embodiment 2 in the user equipment.

An embodiment of the present disclosure provides a computer readable medium, including a computer readable program code, which will cause a computer unit to carry out the beam information acquisition method described in Embodiment 2 in a user equipment.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. A beam information acquisition apparatus, configured in a base station having a planar antenna array, the planar antenna array comprising multiple antenna elements, the multiple antenna elements forming multiple columns in a vertical direction and multiple rows in a horizontal direction, the beam information acquisition apparatus comprising:

   a first signal transmitting unit configured to transmit a first reference signal to a user equipment by using K antenna elements; where, K is less than M, M being the number of antennas in the same polarization direction in each column in the vertical direction;
   a first information receiving unit configured to receive a beam index fed back by the user equipment;
   a first vector determining unit configured to determine a vector having a length K according to the beam index;
   a vector estimating unit configured to estimate a vector having a length L according to the vector having a length K; where, K≤L≤M;
   a second vector determining unit configured to determine multiple weighting vectors based on the vector having a length L;
   a second signal transmitting unit configured to perform weighting on a second reference signal by using the multiple weighting vectors, and transmit the weighted second reference signal to the user equipment; and

a second information receiving unit configured to receive feedback information on multiple transmission antenna ports fed back by the user equipment, and to determine beam weighting information according to the feedback information.

2. The beam information acquisition apparatus according to claim 1, wherein the M is divisible by the K.

3. The beam information acquisition apparatus according to claim 1, wherein the beam information acquisition apparatus further comprises:

a storing unit configured to store a first codebook and multiple second codebooks;
the first vector determining unit is configured to determine the vector having a length K according to the received beam index *n* fed back by the user equipment and the first codebook;
and the second vector determining unit is configured to select multiple weighting vectors respectively for each of the second codebooks according to the vector having a length L and the multiple second codebooks.

4. The beam information acquisition apparatus according to claim 3, wherein for each of the second codebooks, the second vector determining unit is configured to select $N*M_{TXRU}$ vectors and take them as the weighting vectors; and wherein the weighting vectors comprise the vector having a length L, and/or, the weighting vectors are adjacent to the vector having a length L; where, N is a positive integer, and the $M_{TXRU}$ is the number of transceiver units to which M antenna elements in the same polarization direction in each column in the vertical direction are connected.

5. The beam information acquisition apparatus according to claim 3, wherein in the multiple second codebooks, lengths and/or numbers of discrete Fourier transform vectors are partially or completely different.

6. The beam information acquisition apparatus according to claim 1, wherein the second signal transmitting unit is configured to perform weighting on the second reference signal by using the multiple weighting vectors and based on a second TXRU virtualization model;
and wherein in the second TXRU virtualization model, each of transceiver units is connected to M antenna elements.

7. The beam information acquisition apparatus according to claim 6, wherein the second signal transmitting unit is configured to use S resources to transmit the second reference signal;
where, $1 \leq S \leq N*M_{TXRU}$, N being a positive integer, and the $M_{TXRU}$ is the number of transceiver units to which M antenna elements in the same polarization direction in each column in the vertical direction are connected.

8. The beam information acquisition apparatus according to claim 1, wherein the feedback information received by the second information receiving unit is denoted by a bitmap.

9. The beam information acquisition apparatus according to claim 8, wherein the bitmap comprises S bits corresponding respectively to S resources;
where, $1 \leq S \leq N*M_{TXRU}$, N being a positive integer, and the $M_{TXRU}$ is the number of transceiver units to which M antenna elements in the same polarization direction in each column in the vertical direction are connected.

10. The beam information acquisition apparatus according to claim 9, wherein for values of the bits, 1 denotes that power of a signal transmitted by the base station and received by the user equipment at a corresponding port is greater than or equal to a predefined threshold value, and 0 denotes that power of a signal transmitted by the base station and received by the user equipment at a corresponding port is less than the predefined threshold value.

11. A beam information acquisition apparatus, configured in a user equipment, the beam information acquisition apparatus comprising:

a first signal receiving unit configured to receive a first reference signal transmitted by a base station at K antenna elements; where, K is less than M, M being the number of antennas in the same polarization direction in each column in a vertical direction in the base station;
a channel estimating unit configured to perform channel estimation according to the first reference signal;
an index calculating unit configured to calculate a beam index according to a result of the channel estimation;
a first information transmitting unit configured to feed the beam index back to the base station;
a second signal receiving unit configured to receive a second reference signal weighted by using weighting vectors and transmitted by the base station;

a power calculating unit configured to calculate receiving power of multiple transmission antenna ports according to the second reference signal;
a power comparing unit configured to obtain feedback information on the multiple transmission antenna ports by comparing the receiving power with a predefined threshold value; and
a second information transmitting unit configured to transmit the feedback information to the base station.

12. The beam information acquisition apparatus according to claim 11, wherein the beam information acquisition apparatus further comprises:

a storing unit configured to store a first codebook having a relatively small number of vectors;
and the index calculating unit is further configured to calculate the beam index n based on the first codebook according to the result of the channel estimation.

13. The beam information acquisition apparatus according to claim 11, wherein the second signal receiving unit is further configured to receive the second reference signal in S resources;
where, $1 \leq S \leq N*M_{TXRU}$, N being a positive integer, and the $M_{TXRU}$ is the number of transceiver units to which M antenna elements in the same polarization direction in each column in the vertical direction in the base station are connected.

14. The beam information acquisition apparatus according to claim 13, wherein the power calculating unit is further configured to, for each resource $u$, calculate receiving power of each of the multiple transmission antenna ports.

15. The beam information acquisition apparatus according to claim 11, wherein the feedback information is denoted by a bitmap, the bitmap comprising S bits corresponding respectively to S resources;
where, $1 \leq S \leq N*M_{TXRU}$, N being a positive integer, and the $M_{TXRU}$ is the number of transceiver units to which M antenna elements in the same polarization direction in each column in the vertical direction in the base station are connected.

16. The beam information acquisition apparatus according to claim 15, wherein the power comparing unit is further configured to, for each of the resources,
set corresponding information of the bitmap as 1 when the receiving power is greater than or equal to the predefined threshold value, and set corresponding information of the bitmap as 0 when the receiving power is less than the predefined threshold value.

17. A communications system, comprising:

a base station having a planar antenna array comprising multiple antenna elements, the multiple antenna elements forming multiple columns in a vertical direction and multiple rows in a horizontal direction; the base station is configured to transmit a first reference signal to a user equipment by using K antenna elements, receive a beam index fed back by the user equipment, determine a vector having a length K according to the beam index, estimate a vector having a length L according to the vector having a length K, determine multiple weighting vectors based on the vector having a length L, perform weighting on a second reference signal by using the multiple weighting vectors, transmit the weighted second reference signal to the user equipment, receive feedback information on multiple transmission antenna ports fed back by the user equipment, and acquire beam weighting information according to the feedback information; where, M is the number of antennas in the same polarization direction in each column in the vertical direction in the base station, K is less than M, and $K \leq L \leq M$; and
a user equipment configured to receive a first reference signal transmitted by the base station at K antenna elements, perform channel estimation according to the first reference signal, calculate a beam index according to a result of the channel estimation, feed the beam index back to the base station, receive a second reference signal weighted by using weighting vectors and transmitted by the base station, calculate receiving power of multiple transmission antenna ports according to the second reference signal, obtain feedback information on the multiple transmission antenna ports by comparing the receiving power with a predefined threshold value, and transmit the feedback information to the base station.

| | | | |
|---|---|---|---|
| \| | \| | ...... | \| |
| (M-1,0) | (M-1,1) | | (M-1,N-1) |
| : | : | ...... | : |
| \| | \| | ...... | \| |
| (1,0) | (1,1) | | (1,N-1) |
| \| | \| | ...... | \| |
| (0,0) | (0,1) | | (0,N-1) |

**Fig. 1**

| | | | |
|---|---|---|---|
| X | X | ...... | X |
| (M-1,0) | (M-1,1) | | (M-1,N-1) |
| : | : | ...... | : |
| X | X | ...... | X |
| (1,0) | (1,1) | | (1,N-1) |
| X | X | ...... | X |
| (0,0) | (0,1) | | (0,N-1) |

**Fig. 2**

**Fig. 3**

**Fig. 4**

501

a base station transmits a first reference signal to a
user equipment by using K antenna elements

502

the base station receives a beam index fed back by the
user equipment

503

the base station determines a vector having a length K
according to the beam index

504

the base station estimates a vector having a length L
according to the vector having a length K

505

the base station determines multiple weighting vectors
based on the vector having a length L

506

the base station performs weighting on a second
reference signal by using the multiple weighting
vectors, and transmits the weighted second reference
signal to the user equipment

507

the base station receives feedback information on
multiple transmission antenna ports fed back by the
user equipment, and acquires beam weighting
information according to the feedback information

# Fig. 5

601

a user equipment receives a first reference signal
transmitted by a base station at K antenna elements

602

the user equipment performs channel estimation
according to the first reference signal

603

the user equipment calculates a beam index according
to a result of the channel estimation

604

the user equipment feeds the beam index back to the
base station

605

the user equipment receives a second reference signal
weighted by using weighting vectors and transmitted
by the base station

606

the user equipment calculates receiving power of
multiple transmission antenna ports according to the
second reference signal

607

the user equipment obtains feedback information on
the multiple transmission antenna ports by comparing
the receiving power with a predefined threshold value

608

the user equipment transmits the feedback
information to the base station

# Fig. 6

Base station                    User equipment

First stage

Block 701: a first reference signal is
transmitted by using K antenna elements

Block 702: channel estimation is
performed according to the first
reference signal

Block 703: a beam index is
calculated according to a result
of the channel estimation

Block 704: the beam index is fed back

Block 705: a vector having a length
K is determined according to the
beam index

Second stage

Block 706: a vector having a
length L is estimated according
to the vector having a length K

Block 707: multiple weighting
vectors are determined based
on the vector having a length L

Block 708: a second reference signal is weighted
and transmitted

Block 709: receiving power of multiple
transmission antenna ports is calculated
according to the second reference signal

Block 710: the receiving power and a
predefined threshold value are comparied

Block 711: feedback information is transmitted

Block 712: beam weighting
information is determined

## Fig. 7

800

801

**First signal transmitting unit**

802

**First information receiving unit**

803

**First vector determining unit**

808

**Storing unit**

804

**Vector estimating unit**

805

**Second vector determining unit**

806

**Second signal transmitting unit**

807

**Second information receiving unit**

# Fig. 8

**Fig. 9**

1000

1001

First signal
receiving unit

1002

Channel estimating
unit

1003

Index calculating
unit

1009

Storing
unit

1004

First information
transmitting unit

1005

Second signal
receiving unit

1006

Power calculating
unit

1007

Power comparing
unit

1008

Second information
transmitting unit

# Fig. 10

1100

**Fig. 11**

1200

**Fig. 12**

# INTERNATIONAL SEARCH REPORT

| International application No. |
|---|
| **PCT/CN2015/075590** |

## A. CLASSIFICATION OF SUBJECT MATTER

H04W 24/08 (2009.01) i

According to International Patent Classification (IPC) or to both national classification and IPC

## B. FIELDS SEARCHED

Minimum documentation searched (classification system followed by classification symbols)

H04W; H04Q; H04L; H04B

Documentation searched other than minimum documentation to the extent that such documents are included in the fields searched

Electronic data base consulted during the international search (name of data base and, where practicable, search terms used)

CNABS, CNTXT, VEN, WOTXT, USTXT, 3GPP: mass, large-scale, MIMO, multiple input multiple output, antenna, beam+, massive, feedback, return, port?, part+, less, matrix, index+, vector

## C. DOCUMENTS CONSIDERED TO BE RELEVANT

| Category* | Citation of document, with indication, where appropriate, of the relevant passages | Relevant to claim No. |
|---|---|---|
| A | CN 104202073 A (ZTE CORP.), 10 December 2014 (10.12.2014), the whole document | 1-17 |
| A | CN 104335501 A (QUALCOMM INC.), 04 February 2015 (04.02.2015), the whole document | 1-17 |
| A | CN 104184537 A (LONGBO COMMUNICATION TECHNICAL CO., LTD.), 03 December 2014 (03.12.2014), the whole document | 1-17 |
| A | CN 104348763 A (HUAWEI TECHNOLOGIES CO., LTD.), 11 February 2015 (11.02.2015), the whole document | 1-17 |
| A | WO 2014168319 A1 (LG ELECTRONICS INC.), 16 October 2014 (16.10.2014), the whole document | 1-17 |
| A | WO 2013100579 A1 (SAMSUNG ELECTRONICS CO., LTD. et al.), 04 July 2013 (04.07.2013), the whole document | 1-17 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 December 2015 (15.12.2015) | **06 January 2016 (06.01.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **HAO, Yue** Telephone No.: (86-10) **62089372** |
|---|---|

Form PCT/ISA/210 (second sheet) (July 2009)

## INTERNATIONAL SEARCH REPORT

International application No.

**PCT/CN2015/075590**

**C (Continuation).**     **DOCUMENTS CONSIDERED TO BE RELEVANT**

| Category* | Citation of document, with indication, where appropriate, of the relevant passages | Relevant to claim No. |
|---|---|---|
| A | 3rd Generation Partnership Project; Technical Specification Group Radio Access Network; E-UTRA and UTRA; "Radio Frequency (RF) Requirement Background for Active Antenna System (AAS) Base Station (BS) (Release 12)", 3GPP TR 37.842 v1.0.0, 30 September 2014 (30.09.2014), pages 1-29 | 1-17 |

Form PCT/ISA/210 (continuation of second sheet) (July 2009)

**INTERNATIONAL SEARCH REPORT**
Information on patent family members

International application No.

**PCT/CN2015/075590**

| Patent Documents referred in the Report | Publication Date | Patent Family | Publication Date |
|---|---|---|---|
| CN 104202073 A | 10 December 2014 | WO 2015131494 A3 | 22 October 2015 |
| | | WO 2015131494 A2 | 11 September 2015 |
| CN 104335501 A | 04 February 2015 | WO 2013173679 A1 | 21 November 2013 |
| | | US 2013308714 A1 | 21 November 2013 |
| CN 104184537 A | 03 December 2014 | None | |
| CN 104348763 A | 11 February 2015 | WO 2015010607 A1 | 29 January 2015 |
| WO 2014168319 A1 | 16 October 2014 | None | |
| WO 2013100579 A1 | 04 July 2013 | US 2013163457 A1 | 27 June 2013 |
| | | EP 2798749 A1 | 05 November 2014 |
| | | KR 20130075311 A | 05 July 2013 |